# EUROPÄISCHE PATENTSCHRIFT

(11) **EP 2 408 610 B1**
(45) Veröffentlichungstag und Bekanntmachung des Hinweises auf die Patenterteilung: **19.12.2012**
(21) Anmeldenummer: 10711630.3
(22) Anmeldetag: 23.02.2010
(51) Int. Cl.: B29C 70/44, B29C 73/00

(54) **VERFAHREN ZUM ZUMINDEST TEILWEISE NACHBEARBEITEN ODER ERSETZEN EINES VERSTEIFUNGSELEMENTES EINER FASERVERBUNDSTRUKTUR UND ZUGEHÖRIGE ANBINDVORRICHTUNG**
METHOD FOR AT LEAST PARTIALLY REWORKING OR REPLACING A STIFFENER OF A FIBRE COMPOSITE STRUCTURE AND ASSOCIATED TOOLING
PROCÉDÉ POUR AU MOINS PARTIELLEMENT RETRAITER OU REMPLACER UN ÉLÉMENT DE RENFORCEMENT D'UNE STRUCTURE COMPOSITE À FIBRES ET DISPOSITIF DE LIAISON ASSOCIÉ

(30) Priorität: 23.02.2009 DE 102009001075; 23.02.2009 US 208314 P
(43) Veröffentlichungstag der Anmeldung: 25.01.2012
(73) Patentinhaber: Airbus Operations GmbH, 21129 Hamburg (DE)
(72) Erfinder: MARQUARDT, Hans, 21717 Fredenbeck (DE)
(74) Vertreter: Isarpatent
(86) Internationale Anmeldenummer: PCT/EP2010/052251
(87) Internationale Veröffentlichungsnummer: WO 2010/094808

(56) Entgegenhaltungen:
- WO-A1-01/64387
- DE-A1-102007 004 312
- DE-C1- 4 101 854

## Beschreibung

Die Erfindung betrifft ein Verfahren zum zumindest teilweise Nachbearbeiten oder Ersetzen eines Versteifungselementes einer Faserverbundstruktur. Die Erfindung bezieht sich auch auf eine zugehörige Anbindvorrichtung.

Obwohl auf beliebige Faserverbundstrukturen anwendbar, werden die vorliegende Erfindung sowie die ihr zugrunde liegende Problematik in Bezug auf kohlenstofffaserverstärkte Kunststoffbauteile (CFK) einer Flugzeugstruktur näher erläutert.

Flugzeugbauteile werden aus Gründen der Gewichtsersparnis zunehmend aus Faserverbundwerkstoffen, insbesondere aus kohlenstofffaserverstärktem Kunststoff (CFK), hergestellt. Sie weisen dabei einen Aufbau aus mehreren Schichten Fasergelege auf, welche mittels einer ausgehärteten Harzmatrix, insbesondere Epoxydharz, miteinander verbunden sind. Zur Herstellung derartiger Bauteile werden in herkömmlichen Verfahren mit einer Harzmatrix (insbesondere Epoxidharz) imprägnierte Fasergelege in mehreren Schichten in eine Laminiervorrichtung eingelegt. Anschließend wird die Harzmatrix ausgehärtet, z.B. unter Einwirkung erhöhter Temperatur und erhöhten Drucks.

Gemäß einem üblichen Verfahren wird ein Bauteil zur Aushärtung in einen Sack aus druckdichter Folie eingeschlossen, dessen Inneres mittels einer Vakuumpumpe evakuiert wird. Das derart eingeschlossene Bauteil wird sodann in einen Autoklaven verbracht, wo es erhöhtem Druck ausgesetzt wird.

Sind an derartigen Faserverbundbauteilen Nachbearbeitungen, wie beispielsweise Ausbesserung von Fehlern, Reparatur von Beschädigungen und/oder Modifizierung von Bauteilen, auszuführen, werden in einem herkömmlichen Bearbeitungsverfahren zum Beispiel vorimprägnierte Faserlagen (Prepregs) mit einem Klebefilm an der zu bearbeitenden Oberfläche des Bauteils fixiert und mit einer druckdichten Membran z.B. eines Vakuumsacks abgedeckt. Der unter der Membran eingeschlossene Bereich wird evakuiert. Da der erforderliche Härtedruck oft mehr als 1 bar beträgt, kann diese Vakuumsacktechnik allein nicht angewendet werden. Dazu wird das Bauteil in einen Autoklaven verbracht, wo es zur Aushärtung der Faserlagen erhöhtem Druck ausgesetzt wird.

Dafür ist meistens eine geeignete Klebevorrichtung zur Aufnahme und Abstützung des zu bearbeitenden Bauteils erforderlich. Alternativ können auch Spanneinrichtungen zur mechanischen Druckaufbringung benutzt werden.

DE-C-41 01854 offenbart.

DE 10 2007 026 099 A1 beschreibt eine Vorrichtung und ein Verfahren zum Bearbeiten einer Faserverbundstruktur, wobei eine druckdichte Haubenmatte mit Einleitung eines Überdrucks angegeben wird.

WO-A-01/64387 offenbart eine Vorrichtung mit den Merkmalen des Oberbegriffs des Anspruchs 7.

Bei Nachbearbeitungen von Faserverbundbauteilen ist es oft auch notwendig, nicht nur ebene Flächen, sondern zum Beispiel auch Versteifungsprofile, beispielsweise Stringer, nachzubearbeiten (d.h. fehlerhaftes Laminat entfernen und durch ein neues Laminat aus gleichem Material und gleichem Lagenaufbau ersetzen).

Als nachteilig wird dabei empfunden, dass zusätzliche Kapazität im Autoklaven und in den originalen Klebevorrichtungen zu Mehrkosten und Zeitverlust führen.

Mechanische Spanneinrichtungen können oft nur eine ungleichmäßige Druckverteilung erzeugen, was Poren und Dickenschwankungen zur Folgen hat. Fehlerhafte Nachbearbeitung muss daher wiederholt werden. Bei einem Einsatz einer druckdichten Haubenmatte kann das Risiko einer nicht ausreichenden Stabilität bestehen.

Es ist daher Aufgabe der vorliegenden Erfindung, ein verbessertes Verfahren zum zumindest teilweise Nachbearbeiten oder Ersetzen eines Versteifungselementes einer Faserverbundstruktur zu schaffen, das es ermöglicht, Faserlagen zum Nachbearbeiten und/oder als Ersatz bei hoher Materialqualität und Präzision ohne Einsatz eines Autoklaven an die Faserverbundstruktur anzubinden.

Erfindungsgemäß wird diese Aufgabe durch ein Verfahren mit den Merkmalen des unabhängigen Anspruchs 1, sowie durch eine Anbindvorrichtung mit den Merkmalen des unabhängigen Anspruchs 7 gelöst.

Demgemäß wird ein Verfahren zum zumindest teilweise Nachbearbeiten oder Ersetzen eines Versteifungselementes einer Faserverbundstruktur bereitgestellt. Zunächst wird ein Anordnen zumindest einer Faserlage auf einem Oberflächenabschnitt des Versteifungselementes und/oder zumindest eines Ersatzabschnitts des Versteifungselementes aus gleichem Material und gleichem Lagenaufbau auf einem Oberflächenversteifungsabschnitt der Faserverbundstruktur ausgeführt. Dann wird zumindest eine an die Kontur des Versteifungselementes angepasste Druckmatte über der zumindest einen Faserlage und/oder dem zumindest einen Ersatzabschnitt des Versteifungselementes angeordnet, wobei die zumindest eine Druckmatte durch einen an die Kontur des Versteifungselementes angepassten Fixierrahmen in einer Sollposition gestützt und fixiert wird. Die zumindest eine Druckmatte wird anschließend mit einem Druckmedium beaufschlagt, um diese gegen das Versteifungselement und den Fixierrahmen zu pressen. Schließlich erfolgt ein Aushärten der mindestens einen Faserlage und/oder des zumindest einen Ersatzabschnitts des Versteifungselementes.

Ferner wird eine Anbindvorrichtung zur Anbindung einer auf zumindest einem Oberflächenabschnitt eines Versteifungselementes zumindest einen angeordneten Faserlage an dem Versteifungselement und/oder zur Anbindung zumindest eines Ersatzabschnitts aus gleichem Material und gleichem Lagenaufbau des Versteifungselementes auf einem Oberflächenversteifungsabschnitt der Faserverbundstruktur an diese bereitgestellt. Die Anbindvorrichtung weist zumindest eine an die Kontur des Versteifungselementes angepasste Druckmatte auf, welche über dem Versteifungselement angeordnet ist. Weiterhin ist ein an die Kontur des Versteifungselementes angepasster Fixierrahmen zur Stützung und Fixierung der Druckmatte vorgesehen. Die Anbindvorrichtung weist außerdem ein Gegenlager zur Lagerung der Faserverbundstruktur auf, sowie eine erste und zweite Fixiereinheit wobei die zweite Fixiereinheit mit zumindest einem Seitenfixierelement versehen ist.

Versteifungselemente sind zum Beispiel Stringer mit unterschiedlichen Profilformen, wie beispielsweise T-Stringer, Omega-Stringer, A-Stringer, sowie auch Spanten und dergleichen. Die Faserverbundstruktur kann zum Beispiel ein Schalenbauteil eines Flugzeugs sein.

Durch Verwendung des Fixierrahmens wird die Druckmatte, welche mit einem Medium, zum Beispiel Druckluft, unter Druck gesetzt wird, gestützt und gestattet die Aushärtung der Nacharbeitslagen bzw. Ersatzabschnitte in einem engen Toleranzrahmen. Dabei wird eine gleichmäßige Druckverteilung erzielt, welche eine porenfreie Aushärtung und Anbindung mit gleichmäßiger Dickenverteilung zur Folge hat. Somit sind nicht nur flächige, also zweidimensionale, Bereiche und Abschnitte nachbearbeitbar sondern auch dreidimensionale Abschnitte bzw. Elemente.

Somit können unterschiedliche Fälle von Nachbearbeitung abgedeckt werden, wie zum Beispiel Nachbearbeitung eines fehlerhaften Abschnitts auf einem Versteifungsprofil, wobei zumindest eine angeordnete Faserlage an dem Versteifungselement angeordnet wird. Es ist auch möglich, dass zumindest ein neuer Ersatzabschnitt eines Versteifungselementes einen fehlerhaften Abschnitt, der vollständig oder zum Teil entfernt wurde, ersetzt. Ebenfalls kann ein gesamtes fehlerhaftes Versteifungselement, welches vollständig entfernt werden musste, ersetzt werden.

Dabei ist es vorteilhaft möglich, gleiches Material und gleichen Lagenaufbau der zumindest einen Faserlage und/oder des zumindest einen neuen Ersatzabschnitts wie beim Originalbauteil zu verwenden.

Die zumindest eine Faserlage und/oder der zumindest eine Ersatzabschnitt des Versteifungselementes kann vor ihrem/seinen Anordnen vorgeformt werden und dann unausgehärtet, teilgehärtet oder gehärtet mit einem Klebemittel aufgebracht werden.

Von besonderem Vorteil ist dabei, dass kein die gesamte Faserverbundstruktur umschließendes Behältnis wie z.B. ein Autoklav benötigt wird.

Das auf der Unterseite der Faserverbundstruktur vorgesehene Gegenlager ist an die Kontur der Faserverbundstruktur angepasst und ergibt bei Aufnahme der Anbindvorrichtung in einem geeigneten Druckrahmen den Vorteil, dass das gesamte Bauteil, d.h. die Faserverbundstruktur mit dem nachzubearbeitenden Abschnitt bzw. Teil praktisch lastfrei ist, wobei der Druckrahmen in erster Linie den Fixierrahmen und das Gegenlager aufnimmt und stützt. Dadurch werden bei hohen Härtetemperaturen Verformungen vermieden. Ein weiterer Vorteil dabei besteht darin, dass für die Nachbearbeitungen der gleiche Werkstoff wie für das Originalbauteil verwendet werden kann.

Es ist auch möglich, dass der Nacharbeitsbereich mittels einer Vakuumfolie abgedeckt wird, wodurch durch Abdichten der Vakuumfolie auf der Faserverbundstruktur ein begrenzter Unterdruckbereich festgelegt werden kann, wobei in dem Verfahrensschritt des Beaufschlagens der zumindest einen Druckmatte mit einem Druckmedium ein Evakuieren des Unterdruckbereichs durchgeführt wird. Dadurch ist eine Druckerhöhung bei der Vakuumfolientechnik mit besonders gleichmäßiger Druckverteilung erzielbar.

Das Aushärten der mindestens einen Faserlage und/oder des Ersatzabschnitts erfolgt durch Erhitzen, z.B. durch Heizelemente, die in die und/oder an der Druckmatte integriert sind. Das Aushärten der mindestens einen Faserlage und/oder des zumindest einen Ersatzabschnitts wird durch Erhitzen entsprechend einer Aushärttemperatur eines Harzmatrixsystems der Faserlage und/oder des zumindest einen Ersatzabschnitts durchgeführt. Zum Beispiel kann die Faserlage dabei auf eine Temperatur von 125°C bis 180 °C, entsprechend einer verwendeten Harzmatrix, erhitzt werden.

Auch das Gegenlager kann mit zumindest einem Gegenlagerheizelement ausgerüstet sein. Zumindest ein Zusatzheizelement ist ebenfalls möglich. So wird eine gute Wärmeverteilung erreicht.

Eine weitere vorteilhafte Wärmeverteilung wird dadurch erzielt, dass die wärmeübertragenden Druckflächen, welche mit der zumindest einen angeordneten Faserlage an dem Versteifungselement und/oder dem zumindest einen neuen Ersatzabschnitt des Versteifungselementes und/oder mit der Faserverbundstruktur in Kontakt stehen, mit einer Metallfolie zur gleichmäßigen Wärmeverteilung ausgerüstet sind. Diese Metallfolie kann auch flexibel ausgestaltet sein.

Es ist vorgesehen, dass die zumindest eine Druckmatte zumindest eine Druckkammer für ein mit Druck beaufschlagbares Druckmedium aufweist. Das Druckmedium kann zum Beispiel Luft, Gas oder auch eine Flüssigkeit sein.

Die zumindest eine Druckmatte kann in biegesteifen Bereichen zumindest ein Verstärkungselement aufweisen. Die Druckmatte ist vorteilhaft an die Kontur des nachzubearbeitenden Abschnitts bzw. Bauteils angepasst, wobei auch das zumindest eine Verstärkungselement eine konturangepasste Form aufweisen kann.

Eine Konturanpassung kann auch für das zumindest eine Heizelement vorgesehen sein. Das zumindest eine Heizelement kann auch als Einzelteil zwischen Druckmatte und zu bearbeitendem Abschnitt angeordnet werden, wobei es konturangepasst ist und auch eine Funktion als Druckstück aufweisen kann. Es ist auch möglich, dass das zumindest eine Heizelement flexibel ausgebildet ist, um eine noch bessere Flächenauflage und somit bessere Wärmeübertragung zu ermöglichen.

Das zumindest eine Heizelement ist vorteilhafterweise auswechselbar, auch wenn es in der Druckmatte und/oder in dem Gegenlager integriert ist, wobei es bei seinem Ausfall nicht gleichzeitig zu einem Verlust der Druckmatte bzw. des Gegenlagers kommt.

Weiterhin kann die Druckmatte einen Gelenkabschnitt aufweisen, der zum Beispiel zwischen zwei biegesteifen Abschnitten angeordnet ist, und es ermöglicht, dass die Druckmatte nach Beendigung der Nachbearbeitung leicht abnehmbar ist, indem sie um diesen Gelenkabschnitt aufgeschwenkt werden kann.

Der zumindest eine Fixierrahmen hat eine erste Fixiereinheit zur Fixierung waagerechter Bereiche der Druckmatte und eine zweite Fixiereinheit zur Fixierung des Versteifungselementes aufweist, wobei die zweite Fixiereinheit mit zumindest einem Seitenfixierelement zur seitlichen Fixierung des Versteifungselementes versehen ist. Eine solche seitliche Fixierung kann zum Beispiel durch seitliche Druckkomponenten mit Keilflächen realisiert sein, welche insbesondere einen Stegbereich eines Versteifungselementes fixieren. Dabei können diese Fixiereinheiten einstellbar sein, zum Beispiel mechanisch, pneumatisch und/oder hydraulisch. Der Fixierrahmen kann ebenfalls der Kontur des zu bearbeitenden Teils angepasst sein. Er fixiert die Druckmatte in ihrer Sollposition und gewährleistet die Konturtreue. Die mit Druck beaufschlagte Druckmatte kann sich am Fixierrahmen abstützen und so auf den zu bearbeitenden Abschnitt des Versteifungselementes einwirken.

Die Lastfreiheit durch Gegenlager und Fixierrahmen in einem Druckrahmen ergibt, insbesondere bei dünnwandigen Bauteilen, den Vorteil, dass keine Verformungen auftreten, da beim Aushärten die Aushärtetemperatur des Ausgangsmaterials wieder erreicht wird und Belastung des Teils zu Verformungen führen würden.

Die Erfindung wird im Folgenden anhand von Ausführungsbeispielen unter Bezugnahme auf die beiliegenden Figuren der Zeichnung näher erläutert.

Hierbei zeigen:
- Fig. 1: eine schematische Querschnittansicht einer Anbindvorrichtung gemäß eines Ausführungsbeispiels der Erfindung;
- Fig. 2: eine schematische, vergrößerte Querschnittansicht eines zu bearbeitenden Versteifungselementes mit Vakuumfolie versehen;
- Fig. 3: eine schematische, vergrößerte Querschnittansicht einer Druckmatte nach Fig. 1;
- Fig. 4: eine schematische, vergrößerte Querschnittansicht eines Fixierrahmens nach Fig. 1;
- Fig. 5: eine schematische, vergrößerte Querschnittansicht zweier Heizelemente nach Fig. 1;
- Fig. 6: eine schematische Querschnittansicht einer weiteren Druckmatte und eines weiteren Versteifungselementes; und
- Fig. 7: eine schematische Seitenansicht eines Druckrahmens für die erfindungsgemäße Anbindvorrichtung.

In den Figuren bezeichnen dieselben Bezugszeichen gleiche oder funktionsgleiche Komponenten, soweit nichts Gegenteiliges angegeben ist.

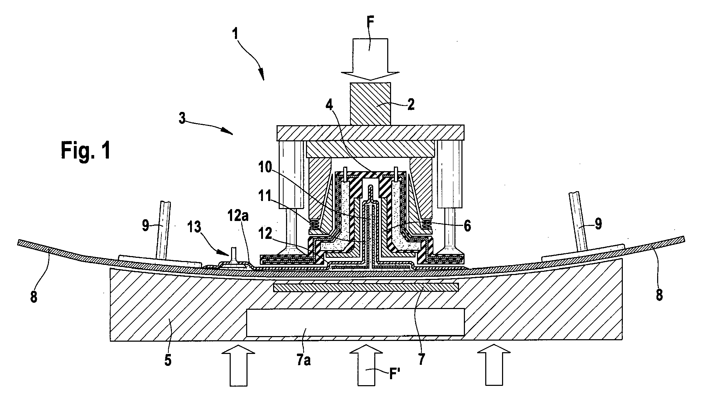

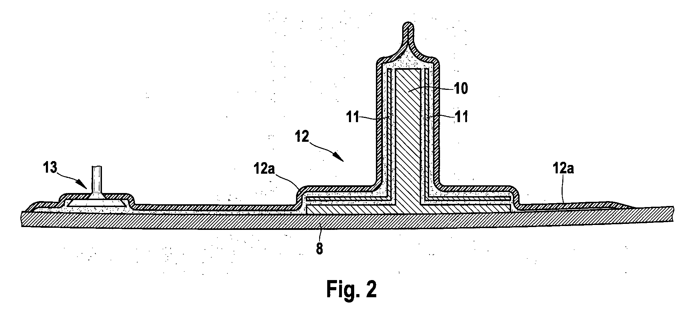

Fig. 1 zeigt eine schematische Querschnittansicht einer Anbindvorrichtung 1 gemäß einem Ausführungsbeispiel der Erfindung und Fig. 2 illustriert eine schematische, vergrößerte Querschnittansicht eines zu bearbeitenden Versteifungselementes 10.

Die Darstellung ist eine Querschnittsansicht, jedoch ist das Versteifungselement 10 in seiner Längsrichtung auf der Zeichenebene stehend dreidimensional vorzustellen.

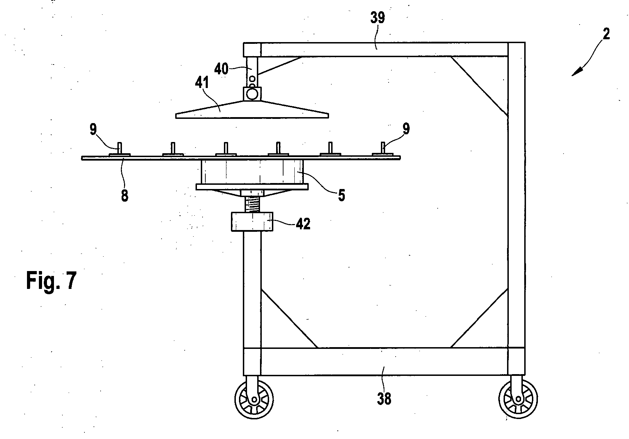

Eine bereits ausgehärtete Faserverbundstruktur 8, zum Beispiel ein Schalenbauteil eines Rumpfabschnitts eines Flugzeugs, ist mit ersten Versteifungselementen 9 und zweiten Versteifungselementen 10 in einer senkrecht auf der Zeichnung stehenden Richtung verstärkt. Diese Versteifungselemente 9, 10 sind als so genannte T-Stringer ausgebildet und ebenfalls bereits ausgehärtet, wobei sie mit einem Fußabschnitt auf der Faserverbundstruktur 8 angebracht sind und ihre Stege hier nach oben weist. Die Faserverbundstruktur 8 ist in einem Gegenlager 5 gehalten, welches in einem Druckrahmen 2 (siehe Fig. 7) angeordnet ist.

Das zweite Versteifungselement 10 ist ein zu bearbeitendes Bauteil, an dem in einem Nacharbeitsbereich 12 beidseitig Faserlagen 11 mit einem L-förmigen Querschnitt angeordnet sind. Abschnitte dieses Versteifungselementes 10 waren im Nacharbeitsbereich 12 in diesem Beispiel fehlerhaft, sind zum Beispiel abgefräst worden und soll nun wieder in vollem Umfang wiederhergestellt werden. Die Faserlagen 11 sind hier zum Beispiel bereits in einem vorherigen Herstellungsschritt mit dem L-förmigen Querschnitt vorgefertigt worden, wobei sie unausgehärtet, teilausgehärtet oder auch gehärtet sein können. Sie sind mit einem geeigneten Kleber oder Matrixwerkstoff, z.B. Epoxidharz, auf diesem zu bearbeitenden Bauteil 10 angebracht.

In diesem Ausführungsbeispiel ist die Anordnung der L-förmigen Faserlagen 11 mit einer Vakuumfolie 12a und einem so genannten Peelply (gestrichelt) überzogen (siehe auch Fig. 2) und an den Rändern so abgedichtet, dass ein Unterdruckbereich zwischen der Vakuumfolie 12a und der Faserverbundstruktur 8 festgelegt ist, welcher über einen Vakuumstutzen 13 an eine Vakuumquelle zur Evakuierung anschließbar ist.

Über dieser Anordnung sind beidseitig Heizelemente 6, welche ebenfalls L-förmig und somit an die Kontur des zu bearbeitenden Versteifungselementes 10 angepasst sind, aufgebracht. Sie werden in ihrem Aufbau weiter unten noch näher erläutert.

Über den Heizelementen 6 ist eine Druckmatte 4 mit einer dem Versteifungselement 10 entsprechenden Kontur so angeordnet, dass die Druckmatte 4 die Heizelemente 6 an ihrer Innenseite aufnimmt. Die Heizelemente 6 können dabei an der Druckmatte 4 angebracht oder als separate Teile ausgebildet sein. Die Druckmatte 4 überdeckt die Anordnung und weist beidseitig Fußabschnitte auf, die sich beidseitig des Versteifungselementes 10 auch über die Vakuumfolie 12a erstrecken. Die Druckmatte 4 wird weiter unten detaillierter beschrieben

Die Druckmatte 4 ist von einem Fixierrahmen 3 in ihrer Sollposition fixiert. Der Fixierrahmen 3, der unten noch näher erläutert wird, weist einen inneren Abschnitt, welcher die Druckmatte 4 im Bereich des Stegs des Versteifungselementes 10 von beiden Seiten her und in senkrechter Richtung nach unten fixiert. Weiterhin sind äußere Abschnitte des Fixierrahmens 3 zur Fixierung der Fußabschnitte der Druckmatte 4 auf der Faserverbundstruktur 8 vorgesehen.

Der Fixierrahmen 3 ist in dem Druckrahmen 2 (nur angedeutet) angeordnet (siehe Fig. 7), welcher eine Reaktionskraft F des Fixierrahmens 3 aufnimmt. Das Gegenlager 5 ist ebenso im Druckrahmen 2 gehalten und überträgt Reaktionskräfte F', wobei Fixierrahmen 3 und Gegenlager 5 so abgestützt sind, dass die Faserverbundstruktur 8 praktisch lastfrei ist.

Das Gegenlager 5 ist in diesem Beispiel mit zumindest einem Gegenlagerheizelement 7 versehen, welches dicht an dem Abschnitt der Faserverbundstruktur 8 angeordnet ist, an welchem das zu bearbeitende Versteifungselement 10 angeordnet ist. Das Gegenlagerheizelement 7 kann auch aus mehreren Heizelementen bestehen. Das Gegenlager 5 kann auch ein Zusatzheizelement 7a zur verbesserten Wärmeübertragung bzw. -verteilung aufweisen.

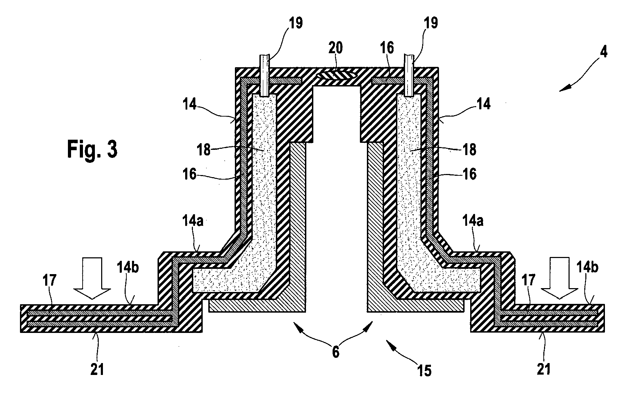

In Fig. 3 ist eine schematische, vergrößerte Querschnittansicht der Druckmatte nach Fig. 1 dargestellt.

Die Druckmatte 4 ist im Wesentlichen symmetrisch zu ihrer Höhenachse mit zwei gegenüber liegenden Teilabschnitten ausgebildet. Die beiden gegenüber liegenden Teilabschnitte sind oben mit einem Gelenkabschnitt 20 im Wesentlichen biegeweich um diesen verschwenkbar, verbunden und schließen einen zwischen ihnen befindlichen Aufnahmeabschnitt 15 für das zu bearbeitenden Versteifungselement 10 (siehe Fig. 1 und 2) ein, an dessen Kontur sie angepasst sind. Innerhalb des Aufnahmeabschnitts 15 ist jeweils auf jeder Seite ein Heizelement 6, entweder an der Druckmatte 4 integriert oder lose als separates Bauteil angeordnet. Innerhalb eines jeden der gegenüber liegenden Teilabschnitte der Druckmatte 4 ist jeweils eine Druckkammer 18 mit jeweils einem Druckkammeranschluss 19 zur Beaufschlagung mit einem Druckmedium angeordnet. Weiterhin sind beide Teilabschnitte in biegesteifen Bereichen mit Verstärkungselementen 16, zum Beispiel Metalldrahtgitter oder dergleichen, versehen. Diese biegesteifen Bereiche sind in diesem Beispiel erste Druckabschnitte 14 für die seitliche Fixierung durch den inneren Abschnitt des Fixierrahmens 3, zweite Druckabschnitte 14a für die senkrechte Fixierung des inneren Abschnitts des Fixierrahmens 3 und dritte Druckabschnitte 14b für die senkrechte Fixierung durch die äußeren Abschnitte des Fixierrahmens 3. In den Fußabschnitten, insbesondere in den dritten Druckabschnitten 14b, sind hier Zusatzverstärkungen 17 vorgesehen.

Die Druckmatte 4 kann zum Beispiel aus einem gummiartigen bzw. elastischen Kunststoff hergestellt sein. Der Gelenkabschnitt 20 dient zur Erleichterung eines Aufbringens und Entformens der Druckmatte 4.

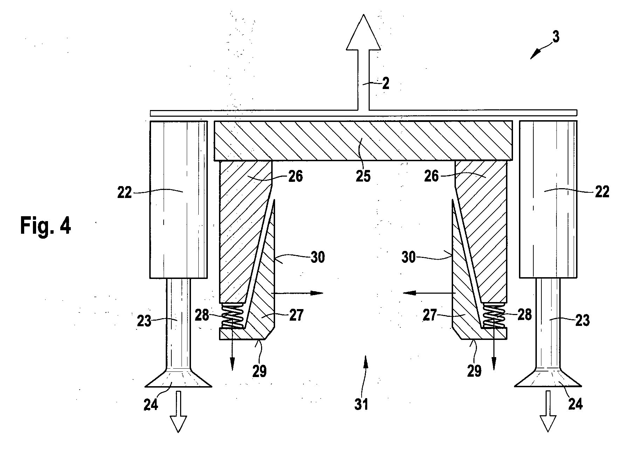

In Fig. 4 ist der Fixierrahmen 3 schematisch in einer Seitenansicht illustriert.

Der Fixierrahmen 3 umfasst äußere Abschnitte 22 bis 24 und innere Abschnitte 25 bis 29. Ein äußerer Abschnitt umfasst eine erste Fixiereinheit 22 mit einem Stempel 23, welcher an seinem unteren Ende einen Fuß 24 aufweist. Die äußeren Abschnitte umgeben einen Aufnahmebereich 31, in welchem die Anordnung mit der Druckmatte 4 und dem zu bearbeitenden Versteifungselement 10 angeordnet ist, wie Fig. 1 illustriert. Die äußeren Abschnitte können in Längsrichtung des Versteifungselementes, d.h. senkrecht auf der Zeichnungsebene, in mehrfacher Ausführung entsprechend der Länge des zu bearbeitenden Abschnitts hintereinander angeordnet sein.

Diese ersten Fixiereinheiten 22 bis 24 bilden senkrechte Druckkomponenten, wobei die Füße 24 zur Fixierung der waagerechten dritten Druckabschnitte 14b der Druckmatte 4 (siehe Fig. 3 und 1) vorgesehen sind. Die ersten Fixiereinheiten 22 können zum Beispiel mechanisch (Schraubenspindel), pneumatisch und/oder hydraulisch (Druckzylinder) einstellbar ausgeführt sein.

Der innere Abschnitt des Fixierrahmens 3 weist beiderseits des Aufnahmeabschnitts 31 zweite Fixiereinheiten 26 auf, die an einem Körper 25 angebracht sind. Die ersten Fixiereinheiten 26 stehen jeweils mit Seitenfixierelementen 27 über seitliche Keilflächen und in senkrechter Richtung über Federn 28 in Zusammenwirkung. Die Federn 28 üben eine senkrechte Druckkraft auf die Seitenfixierelemente 27 derart aus, dass Fußabschnitte 29 der Seitenfixierelemente 27 auf die zweiten Druckabschnitte 14a der Druckmatte 4 (siehe Fig. 3 und 1) einwirken und diese fixieren. Die Federn 28 können zur Druckangleichung einstellbar sein.

Weiterhin sind die Seitenfixierelemente 27 zur seitlichen Fixierung des zu bearbeitenden Bereiches des Versteifungselementes 10, in diesem Beispiel des Stegs des T-Stringers, vorgesehen. Über die Keilflächen und geeignete Stellmittel können die seitlichen Fixierkräfte eingestellt werden.

Wenn die Druckkammern 18 der Druckmatte 4 mittels eines Druckmediums mit Druck beaufschlagt werden, stützen sich die äußeren, d.h. ersten Druckabschnitte 14 der Druckmatte 4 an den Seitenfixierelementen 27 und die zweiten Druckabschnitte 14a der Druckmatte 4 an den Fußabschnitten 29 des Fixierrahmens 3 ab (siehe Fig. 1). Die inneren Flächen im Aufnahmeabschnitt 15 der Druckmatte 4 (siehe Fig. 3) übertragen die Druckkräfte über die Heizelemente 6 auf das zu bearbeitende Versteifungselement 10 sowohl in seitlicher als auch in dazu senkrechter Richtung (in diesem Beispiel).

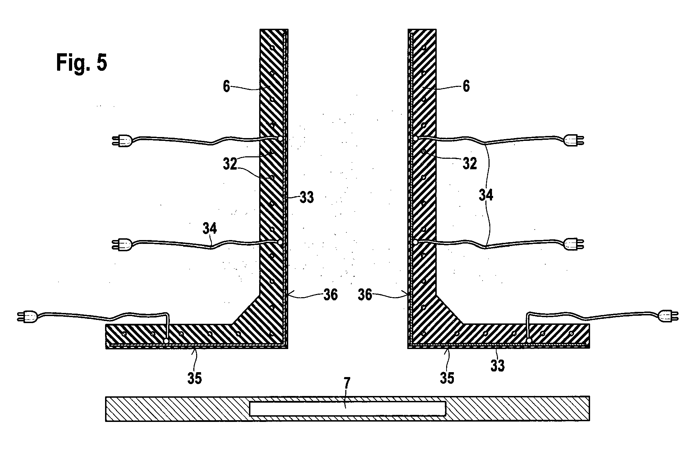

In diesem Beispiel sind die Heizelemente 6 als Druckstücke ausgestaltet und der Kontur des Versteifungselementes 10 angepasst (T-Stringer), wie Fig. 5 in einer schematischen Seitenansicht zeigt. Diese Heizelemente 6 können flexibel ausgebildet sein, wobei ihr Werkstoff gegenüber den verwendeten Materialien der Faserlagen 11 und den Härtetemperaturen beständig sein muss. Innerhalb der Heizelemente 6 sind in diesem Beispiel Leiterbahnen 32 (Verlauf senkrecht zur Zeichenebene) für eine elektrische Heizung angeordnet. Diejenigen Oberflächen der Heizelemente 6, welche mit den zu bearbeitenden Abschnitten in Kontakt stehen, sind hier mit Metallfolien 33, die auch flexibel ausgebildet sein können, als Wärmeverteilelemente überzogen. Die Metallfolien 33 ergeben eine gleichmäßige Wärmeverteilung, d.h. Wärmeübertragung, über erste Auflageabschnitte 35 und zweite Auflageabschnitte 36 auf den zu bearbeitenden, d.h. zu härtenden, Werkstoff der Faserlagen 11.

Weiterhin sind die Heizelemente 6 mit Temperatursensoren 34, z.B. Thermoelemente, zur Temperaturmessung versehen. Die Temperatursensoren sind in den Körpern der Heizelemente 6 dicht an den Metallfolien 33 angeordnet und mit einer Temperaturregelung (nicht gezeigt) elektrisch verbunden.

Die Metallfolien 33 können zum Beispiel aus Kupfer, Aluminium oder Blei bestehen.

Ferner ist in Fig. 5 auch das Gegenlagerheizelement 7 schematisch dargestellt, welches den gleichen Aufbau der oben beschriebenen Heizelemente 6 aufweisen kann. Dies gilt auch für das Zusatzheizelement 7a.

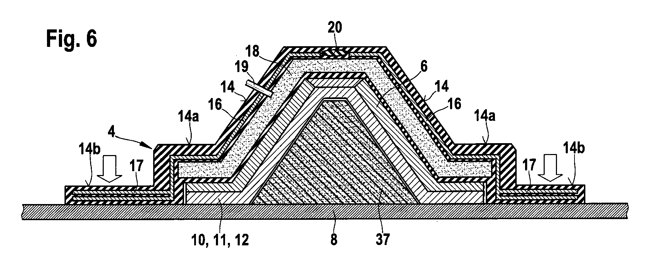

Fig. 6 zeigt eine schematische Querschnittansicht einer weiteren Druckmatte 4 und eines weiteren Versteifungselementes 10.

Dieses Versteifungselement 10 ist als so genannter A-Stringer ausgebildet und weist einen Innenraum auf, der mit einer festen Stützstruktur 37, z.B. ein Kernelement als Schaumkern, oder einer flexiblen Stützstruktur, wie z.B. einem Vakuumschlauch, während der Nachbearbeitung versehen ist. Hier ist ein Ersatzabschnitt aus Nasslagen der Nachbearbeitung (im Querschnitt) als A-Stringer geformt gezeigt. In diesem Beispiel ist nur ein Heizelement 6 über dem zu bearbeitenden Abschnitt angeordnet. Das Heizelement 6 ist an die Kontur des A-Stringers angepasst, ebenso die darüber angeordnete Druckmatte 4.

Die Druckmatte 4 weist den Gelenkabschnitt 20 und eine durchgehende Druckkammer 18 mit Druckkammeranschluss 19 auf. Die ersten Druckabschnitte 14 der Druckmatte 4 sind entsprechend der Kontur des A-Stringers geneigt. Demzufolge sind die Seitenfixierelemente 27 des zugehörigen Fixierrahmens 3 auch geneigt ausgebildet, was nicht dargestellt, aber leicht vorstellbar ist. Die zweiten und dritten Druckabschnitte 14a und 14b der Druckmatte 4 sind hier wie in Fig. 1 bzw. Fig. 3 waagerecht ausgebildet. Die Druckmatte 4 ist ebenfalls mit Verstärkungselementen 16 in den biegesteifen Bereichen wie oben beschrieben versehen.

Figur 7 zeigt eine schematische Seitenansicht eines Druckrahmens 2 für die erfindungsgemäße Anbindvorrichtung 1 in Seitenansicht. Der Druckrahmen 2 weist hier einen fahrbare Rahmen 38 auf, der in galgenartiger Ausbildung einen Holm 39 trägt, an dessen einem Ende ein Haltearm 40 mit einem Aufnahmemittel 41 angebracht ist. Unterhalb des Haltearms 40 ist eine Gegenlageraufnahme 42 an dem Rahmen 38 angebracht, welche das Gegenlager 5 vertikal verstellbar trägt. Auf dem Gegenlager 5 ist hier nur die Faserverbundstruktur 8 mit Versteifungselementen 9 gezeigt, wobei die Anbindvorrichtung 1 nach Fig. 1 noch aufzubringen ist, was leicht vorstellbar ist.

Das Aufnahmemittel 41 ist zur Anbindung an den Fixierrahmen 3 angepasst. Durch die verstellbare Gegenlageraufnahme 5 kann die gesamte Anbindvorrichtung 1 so fixiert werden, wie oben beschrieben ist.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise kann die Druckmatte 4 aus mehreren Druckmatten 4 bestehen.

Der Fixierrahmen 3 kann mehrere Einheiten als die gezeigten aufweisen.

Die Erfindung schafft ein Verfahren zum zumindest teilweise Nachbearbeiten oder Ersetzen eines Versteifungselementes (10) einer Faserverbundstruktur (8) bereitgestellt. In einem ersten Verfahrensschritt wird zumindest eine Faserlage (11) auf einem Oberflächenabschnitt des Versteifungselementes (10) und/oder zumindest ein Ersatzabschnitt des Versteifungselementes (10) aus gleichem Material und gleichem Lagenaufbau auf einem Oberflächenversteifungsabschnitt der Faserverbundstruktur (8) angeordnet. Dann wird in einem zweiten Verfahrensschritt zumindest eine an die Kontur des Versteifungselementes (10) angepasste Druckmatte (4) über der zumindest einen Faserlage (11) und/oder des zumindest einen Ersatzabschnitts des Versteifungselementes (10) angeordnet, wobei die zumindest eine Druckmatte (4) durch einen an die Kontur des Versteifungselementes (10) angepassten Fixierrahmen (3) in einer Sollposition gestützt und fixiert wird. Die zumindest eine Druckmatte (4) wird anschließend in einem dritten Verfahrensschritt mit einem Druckmedium beaufschlagt, um diese gegen das Versteifungselement (10) und den Fixierrahmen (3) zu pressen. Schließlich erfolgt ein Aushärten der mindestens einen Faserlage (11) und/oder des zumindest einen Ersatzabschnitts des Versteifungselementes (10) in einem vierten Verfahrensschritt. Die Erfindung schafft weiterhin eine entsprechende Anbindungsvorrichtung (1) zur Durchführung des Verfahrens.

### Bezugszeichenliste

- 1: Anbindvorrichtung
- 2: Druckrahmen
- 3: Fixierrahmen
- 4: Druckmatte
- 5: Gegenlager
- 6: Heizelement
- 7: Gegenlagerheizelement
- 7a: Zusatzheizelement
- 8: Faserverbundstruktur
- 9: Erstes Versteifungselement
- 10: Zweites Versteifungselement
- 11: Faserlage
- 12: Nacharbeitsbereich
- 12a: Vakuumfolie
- 13: Vakuumanschluss
- 14: Erster Druckabschnitt
- 14a: Zweiter Druckabschnitt
- 14b: Dritter Druckabschnitt
- 15: Aufnahmeabschnitt
- 16: Verstärkungselement
- 17: Zusatzverstärkung
- 18: Druckkammer
- 19: Druckkammeranschluss
- 20: Gelenkabschnitt
- 21: Auflageabschnitt
- 22: Erste Fixiereinheit
- 23: Stempel
- 24: Fuß
- 25: Körper
- 26: Zweite Fixiereinheit
- 27: Seitenfixierelement
- 28: Feder
- 29: Fußabschnitt
- 30: Seitendruckabschnitt
- 31: Aufnahmebereich
- 32: Leiterbahn
- 33: Metallfolie
- 34: Temperatursensor
- 35: Erster Auflageabschnitt
- 36: Zweiter Auflageabschnitt
- 37: Stützstruktur
- 38: Rahmen
- 39: Holm
- 40: Haltearm
- 41: Aufnahmemittel
- 42: Gegenlageraufnahme
- F, F': Reaktionskraft

## Patentansprüche

1. Verfahren zum zumindest teilweise Nachbearbeiten oder zum zumindest teilweise Ersetzen eines Versteifungselementes (10) einer Faserverbundstruktur (8), mit folgenden Verfahrensschritten:
Anordnen zumindest einer Faserlage (11) auf einem Oberflächenabschnitt des Versteifungselementes (10) und/oder zumindest eines Ersatzabschnitts des Versteifungselementes (10) aus gleichem Material und gleichem Lagenaufbau auf einem Oberflächenversteifungsabschnitt der Faserverbundstruktur (8) **gekennzeichnet durch**
Anordnen zumindest einer an die Kontur des Versteifungselementes (10) angepassten Druckmatte (4) über der zumindest einen Faserlage (11) und/oder des zumindest einen Ersatzabschnitts des Versteifungselementes (10), wobei die zumindest eine Druckmatte (4) **durch** einen an die Kontur des Versteifungselementes (10) angepassten Fixierrahmen (3) in einer Sollposition gestützt und fixiert wird;
Abstützen der Faserverbundstruktur (8) in einem dem Fixierrahmen (3) gegenüberliegenden Bereich **durch** ein Gegenlager (5);
Beaufschlagen der zumindest einen Druckmatte (4) mit einem Druckmedium, um diese gegen das Versteifungselement (10) und den Fixierrahmen (3) zu pressen; und Aushärten der mindestens einen Faserlage (11) und/oder des zumindest einen Ersatzabschnitts des Versteifungselementes (10).

2. Verfahren nach Anspruch 1,
**dadurch gekennzeichnet;**
**dass** die zumindest eine Faserlage (11) und/oder der zumindest eine Ersatzabschnitt des Versteifungselementes (10) vor ihrem/seinen Anordnen vorgeformt wird und dann unausgehärtet, teilgehärtet oder gehärtet mit einem Klebemittel aufgebracht wird.

3. Verfahren nach Anspruch 1 oder 2,
**dadurch gekennzeichnet,**
**dass** nach dem Verfahrensschritt des Anordnens der zumindest einen Faserlage (11) und/oder des zumindest einen Ersatzabschnitts des Versteifungselementes (10) weiterhin die Schritte vorgesehen sind:
Abdecken der zumindest einen Faserlage (11) und/oder des zumindest einen Ersatzabschnitts des versteifungselementes (10) durch eine Vakuumfolie (12a); und
Abdichten eines durch die Vakuumfolie (12a) und die Faserverbundstruktur (8) begrenzten Unterdruckbereichs, wobei in dem Verfahrensschritt des Beaufschlagens der zumindest einen Druckmatte (4) mit einem Druckmedium ein Evakuieren des Unterdruckbereichs durchgeführt wird.

4. Verfahren nach wenigstens einem der vorhergehenden Ansprüche,
**dadurch gekennzeichnet,**
**dass** im Verfahrensschritt Aushärten der zumindest einen Faserlage (11) und/oder des zumindest einen Ersatzabschnitts ein Erhitzen entsprechend einer Aushärttemperatur eines Harzmatrixsystems der Faserlage (11) und/oder des zumindest einen Ersatzabschnitts durchgeführt wird.

5. Verfahren nach Anspruch 4,
**dadurch gekennzeichnet,**
**dass** das Erhitzen durch zumindest ein Heizelement (6), welches in der Druckmatte (4) integriert, an ihr angebracht und/oder zwischen der Druckmatte (4) und der zumindest einen Faserlage (11) und/oder dem zumindest einen Ersatzabschnitt als separates Bauteil angeordnet wird, durchgeführt wird.

6. Verfahren nach Anspruch 5,
**dadurch gekennzeichnet,**
**dass** das Erhitzen ferner durch zumindest ein im und/oder am Gegenlager (5) angeordnetes Gegenlagerheizelement (7, 7a) durchgeführt wird.

7. Anbindvorrichtung (1) zur Anbindung zumindest einer auf zumindest einem Oberflächenabschnitt eines Versteifungselementes angeordneten Faserlage (11) an dem Versteifungselement (10) und/oder zur Anbindung zumindest eines Ersatzabschnitts aus gleichem Material und gleichem Lagenaufbau des Versteifungselementes (10) auf einem Oberflächenversteifungsabschnitt der Faserverbundstruktur (8) an diese, mit:
zumindest einer an die Kontur des Versteifungselementes (10) angepassten Druckmatte (4), welche zumindest eine Druckkammer (18) für ein mit Druck beaufschlagbares Druckmedium aufweist und über der zumindest einen Faserlage (11) und/oder dem zumindest einen Ersatzabschnitt des Versteifungselementes (10) angeordnet ist;
einem an die Kontur des Versteifungselementes (10) angepassten Fixierrahmen (3) zur Stützung und Fixierung der Druckmatte (4); und
einem Gegenlager (5) zur Lagerung der Faserverbundstruktur (8), **gekennzeichnet dadurch, dass** der zumindest eine Fixierrahmen (3) eine erste Fixiereinheit (22, 23, 24) zur Fixierung waagerechter Bereiche der Druckmatte (4) und eine zweite Fixiereinheit (26) zur Fixierung des Versteifungselementes (10) aufweist, wobei die zweite Fixiereinheit (26) mit zumindest einem Seitenfixierelement (27) zur seitlichen Fixierung des Versteifungselementes (10) versehen ist.

8. Anbindvorrichtung (1) nach Anspruch 7,
**dadurch gekennzeichnet,**
**dass** die zumindest eine Druckmatte (4) in biegesteifen Bereichen zumindest ein Verstärkungselement (17) aufweist.

9. Anbindvorrichtung (1) nach Anspruch 7 oder 8,
**dadurch gekennzeichnet,**
**dass** die zumindest eine Druckmatte (4) einen Gelenkabschnitt (20) aufweist.

10. Anbindvorrichtung (1) nach wenigstens einem der Ansprüche 7 bis 9,
**dadurch gekennzeichnet,**
**dass** zumindest ein Heizelement (6) in der Druckmatte (4) integriert und/oder an ihr an die Kontur des Versteifungselementes (10) angepasst angebracht vorgesehen ist.

11. Anbindvorrichtung (1) nach wenigstens einem der Ansprüche 7 bis 9,
**dadurch gekennzeichnet,**
**dass** zumindest ein Heizelement (6) zwischen der Druckmatte (4) und der zumindest einen Faserlage (11) und/oder dem zumindest einen Ersatzabschnitt als separates Bauteil an die Kontur des Versteifungselementes (10) angepasst angeordnet ist.

12. Anbindvorrichtung (1) nach Anspruch 10 oder 11,
**dadurch gekennzeichnet,**
**dass** zumindest ein Gegenlagerheizelement (7) in und/oder an dem Gegenlager (5) angeordnet ist.

13. Anbindvorrichtung (1) nach wenigstens einem der Ansprüche 7 bis 12,
**dadurch gekennzeichnet,**
**dass** die wärmeübertragenden Druckflächen, welche mit der zumindest einen angeordneten Faserlage an dem Versteifungselement (10) und/oder dem zumindest einen neuen Ersatzabschnitt des Versteifungselementes (10) und/oder mit der Faserverbundstruktur (8) in Kontakt stehen, mit einer Metallfolie (33) zur gleichmäßigen Wärmeverteilung ausgerüstet sind.

## Claims

1. Method for at least partially reworking or for at least partially replacing a stiffening element (10) of a fibre composite structure (8), comprising the following method steps:
- arranging at least one fibre layer (11) on a surface portion of the stiffening element (10) and/or arranging at least one replacement portion of the stiffening element (10) of the same material and the same layer construction on a surface stiffening portion of the fibre composite structure (8),
**characterised by**
arranging at least one pressure mat (4), which is adapted to the outline of the stiffening element (10), above the at least one fibre layer (11) and/or arranging the at least one replacement portion of the stiffening element (10), the at least one pressure mat (4) being supported and fixed in a target position by a fixing frame (3), which is adapted to the outline of the stiffening element (10);
bracing the fibre composite structure (8) in a region opposite the fixing frame (3), by means of a counter bearing (5);
loading the at least one pressure mat (4) with a pressure medium so as to press said mat against the stiffening element (10) and the fixing frame (3); and curing the at least one fibre layer (11) and/or the at least one replacement portion of the stiffening element (10).

2. Method according to claim 1, **characterised in that** the at least one fibre layer (11) and/or the at least one replacement portion of the stiffening element (10) is preformed before being arranged, and is subsequently applied in an uncured, partially cured or cured form by means of an adhesive.

3. Method according to either claim 1 or claim 2, **characterised in that** after the method step of arranging the at least one fibre layer (11) and/or the at least one replacement portion of the stiffening element (10), the following steps are further provided:
- covering the at least one fibre layer (11) and/or the at least one replacement portion of the stiffening element (10) with a vacuum film (12a); and
- sealing a negative pressure region which is defined by the vacuum film (12a) and the fibre composite structure (8), the negative pressure region being evacuated in the method step of loading the at least one pressure mat (4) with a pressure medium.

4. Method according to at least one of the preceding claims, **characterised in that** in the method step of curing the at least one fibre layer (11) and/or the at least one replacement portion, heating is carried out in accordance with a curing temperature of a resin matrix system of the fibre layer (11) and/or of the at least one replacement portion.

5. Method according to claim 4, **characterised in that** the heating is carried out by way of at least one heating member (6), which is integrated into the pressure mat (4), applied to said pressure mat, and/or arranged between the pressure mat (4) and the at least one fibre layer (11) and/or the at least one replacement portion as a separate component.

6. Method according to claim 5, **characterised in that** the heating is further carried out by way of at least one counter bearing heating member (7, 7a) which is arranged in and/or on the counter bearing (5).

7. Binding device (1) for binding at least one fibre layer (11), which is arranged on at least one surface portion of a reinforcing element, to the stiffening element (10) and/or for binding at least one replacement portion of the same material and the same layer construction of the stiffening element (10), on a surface stiffening portion of the fibre composite structure (8), to said structure, comprising:
- at least one pressure mat (4), which is adapted to the outline of the stiffening element (10), comprises at least one pressure chamber (18) for a pressure medium which can be subjected to a pressure, and is arranged above the at least one fibre layer (11) and/or the at least one replacement portion of the stiffening element (10);
- a fixing frame (3), which is adapted to the outline of the stiffening element (10), for supporting and fixing the pressure mat (4); and
- a counter bearing (5) for mounting the fibre composite structure (8),
**characterised in that** the at least one fixing frame (3) comprises a first fixing unit (22, 23, 24) for fixing horizontal regions of the pressure mat (4) and a second fixing unit (26) for fixing the stiffening element (10), the second fixing unit (26) being provided with at least one lateral fixing element (27) for laterally fixing the stiffening element (10).

8. Binding device (1) according to claim 7, **characterised in that** the at least one pressure mat (4) comprises at least one reinforcement element (17) in flexurally rigid regions.

9. Binding device (1) according to either claim 7 or claim 8, **characterised in that** the at least one pressure mat (4) comprises an articulated portion (20).

10. Binding device (1) according to at least one of claims 7 to 9, **characterised in that** at least one heating member (6) is provided so as to be integrated into the pressure mat (4) and/or so as to be applied thereto in a manner adapted to the contour of the stiffening element (10).

11. Binding device (1) according to at least one of claims 7 to 9, **characterised in that** at least one heating member (6) is arranged between the pressure mat (4) and the at least one fibre layer (11) and/or the at least one replacement portion as a separate component, in a manner adapted to the outline of the stiffening element (10).

12. Binding device (1) according to either claim 10 or claim 11, **characterised in that** at least one counter bearing heating member (7) is arranged in and/or on the counter bearing (5).

13. Binding device (1) according to at least one of claims 7 to 12, **characterised in that** the heat-transmitting pressure surfaces, which are in contact with the at least one arranged fibre layer on the stiffening element (10) and/or the at least one new replacement portion of the stiffening element (10) and/or with the fibre composite structure (8), are equipped with a metal foil (33) for uniform heat distribution.

## Revendications

1. Procédé pour au moins partiellement usiner ultérieurement ou remplacer un élément de renforcement (10) d'une structure composite à fibres (8), avec les étapes de procédé suivantes :
- disposition d'au moins une couche de fibres (11) sur une section superficielle de l'élément de renforcement (10) et/ou d'au moins une section de remplacement de l'élément de renforcement (10), constituée du même matériau et de la même structure multicouches, sur une section de renforcement superficielle de la structure composite à fibres (8)
**caractérisé par**
la disposition d'au moins un tapis de pression (4) adapté au contour de l'élément de renforcement (10) par-dessus ladite au moins une couche de fibres (11) et/ou de ladite au moins une section de remplacement de l'élément de renforcement (10), ledit au moins un tapis de pression (4) étant supporté et fixé dans une position de consigne par un cadre de fixation (3) adapté au contour de l'élément de renforcement (10) ;
le support de la structure composite à fibres (8) dans une zone en regard du cadre de fixation (3) par un contre-palier (5) ;
la soumission de l'au moins un tapis de pression (4) à un agent de pression, afin de presser celui-ci contre l'élément de renforcement (10) et le cadre de fixation (3) ; et
le durcissement de l'au moins une couche de fibres (11) et/ou de l'au moins une section de remplacement de l'élément de renforcement (10).

2. Procédé selon la revendication 1, **caractérisé par le fait que** l'au moins une couche de fibres (11) et/ou l'au moins une section de remplacement de l'élément de renforcement (10) est préformée avant sa disposition puis est appliquée non durcie, partiellement durcie ou durcie avec un moyen adhésif.

3. Procédé selon la revendication 1 ou 2, **caractérisé par le fait que**, après l'étape de procédé de la disposition de l'au moins une couche de fibres (11) et/ou de l'au moins une section de remplacement de l'élément de renforcement (10), les étapes suivantes sont en outre prévues :
- recouvrement de l'au moins une couche de fibres (11) et/ou de l'au moins une couche de remplacement de l'élément de renforcement (10) par un film sous vide (12a) ; et
- obturation d'une zone de dépression délimitée par le film sous vide (12a) et la structure composite à fibres (8), une évacuation de la zone de dépression étant effectuée dans l'étape de procédé de soumission de l'au moins un tapis de pression (4) à un agent de pression.

4. Procédé selon au moins l'une des revendications précédentes, **caractérisé par le fait que**, dans l'étape de procédé de durcissement de l'au moins une couche de fibres (11) et/ou de l'au moins une section de remplacement, un réchauffement est réalisé selon une température de durcissement d'un système de matrice de résine de la couche de fibres (11) et/ou de l'au moins une section de remplacement.

5. Procédé selon la revendication 4, **caractérisé par le fait que** le réchauffement est réalisé par au moins un élément de chauffage (6), qui est intégré dans le tapis de pression (4), apposé sur ce dernier et/ou disposé entre le tapis de pression (4) et l'au moins une couche de fibres (11) et/ou l'au moins une section de remplacement en tant que composant séparé.

6. Procédé selon la revendication 5, **caractérisé par le fait que** le réchauffement est de plus réalisé par au moins un élément de chauffage de contre-palier (7, 7a) disposé dans ou sur le contre-palier (5).

7. Dispositif de liaison (1) pour la liaison de l'au moins une couche de fibres (11) disposée sur au moins une section de renforcement superficielle d'un élément de renforcement à l'élément de renforcement (10) et/ou pour la liaison d'au moins une section de remplacement constituée du même matériau et de la même structure multicouches de l'élément de renforcement (10) sur une section de renforcement superficielle de la structure composite à fibres (8) à celle-ci ; avec :
- au moins un tapis de pression (4) adapté au contour de l'élément de renforcement (10), qui présente au moins une chambre de compression (18) pour un agent de pression pouvant être soumis à une pression et est disposé sur l'au moins une couche de fibres (11) et/ou l'au moins une section de remplacement de l'élément de renforcement (10) ;
- un cadre de fixation (3) adapté au contour de l'élément de renforcement (10) pour le support et la fixation du tapis de pression (4) ; et
- un contre-palier (5) pour le logement de la structure composite à fibres (8),
**caractérisé par le fait que** l'au moins un cadre de fixation (3) présente une première unité de fixation (22, 23, 24) pour la fixation de zones horizontales du tapis de pression (4) et une seconde unité de fixation (26) pour la fixation de l'élément de renforcement (10), la seconde unité de fixation (26) étant pourvue d'au moins un élément de fixation latérale (27) pour la fixation latérale de l'élément de renforcement (10).

8. Dispositif de liaison (1) selon la revendication 7, **caractérisé par le fait que** l'au moins un tapis de pression (4) présente dans des zones résistantes à la flexion au moins un élément de consolidation (17).

9. Dispositif de liaison (1) selon la revendication 7 ou 8, **caractérisé par le fait que** l'au moins un tapis de pression (4) présente une section articulée (20).

10. Dispositif de liaison (1) selon au moins l'une des revendications 7 à 9, **caractérisé par le fait qu'**au moins un élément de chauffage (6) est intégré dans le tapis de pression (4) et/ou est prévu pour y être apposé de manière adaptée au contour de l'élément de renforcement (10).

11. Dispositif de liaison (1) selon au moins l'une des revendications 7 à 9, **caractérisé par le fait qu'**au moins un élément de chauffage (6) est disposé entre le tapis de pression (4) et l'au moins une couche de fibres (11) et/ou l'au moins une section de remplacement de manière adaptée comme un composant séparé au niveau du contour de l'élément de renforcement (10).

12. Dispositif de liaison (1) selon la revendication 10 ou 11, **caractérisé par le fait qu'**au moins un élément de chauffage de contre-palier (7) est disposé dans et/ou sur le contre-palier (5).

13. Dispositif de liaison (1) selon au moins l'une des revendications 7 à 12, **caractérisé par le fait que** les surfaces de pression caloporteuses, qui sont en contact avec l'au moins une couche de fibres disposée au niveau de l'élément de renforcement (10) et/ou de l'au moins une nouvelle section de remplacement de l'élément de renforcement (10) et/ou avec la structure composite à fibres (8), sont équipées d'un film métallique (33) pour une répartition homogène de la chaleur.
